# EUROPÄISCHE PATENTANMELDUNG

(11) **EP 3 518 398 A1**
(43) Veröffentlichungstag der Anmeldung: **31.07.2019**
(21) Anmeldenummer: 18154071.7
(22) Anmeldetag: 30.01.2018
(51) Int. Cl.: H02K 15/00, H02K 17/16

(54) **KURZSCHLUSSRING ZUR VERBINDUNG MIT KÄFIGSTÄBEN**

(71) Anmelder: Siemens Aktiengesellschaft, 80333 München (DE)
(72) Erfinder: Müller, Jörg, 97720 Nüdlingen (DE); Schneider, Alexandra, 97618 Heustreu (DE); Streit, Dietmar, 97640 Oberstreu (DE)

(57) **Zusammenfassung**

Die Erfindung betrifft einen Kurzschlussring (1) für einen Kurzschlusskäfig einer elektrischen Maschine, wobei der Kurzschlussring (1) wenigstens eine Aussparung, vorzugsweise mehrere Aussparungen, zur Aufnahme von wenigstens einem Käfigstab (3), vorzugsweise mehreren Käfigstäben, aufweist, wobei der Kurzschlussring (1) dazu ausgebildet ist, ein Ende des Käfigstabs (3) aufzunehmen. An wenigstens eine Aussparung angrenzend ist eine Vertiefung mit einer Vertiefungskontur (4,5,6,7,8,9) an einem vorderen axialen Ende (12) des Kurzschlussrings (1) ausgebildet. Ferner betrifft die Erfindung ein Verfahren zum Verbinden eines derartigen Kurzschlussrings (1) mit wenigstens einem Käfigstab (3), vorzugweise mehreren Käfigstäben, zur Fertigung eines Kurzschlusskäfigs.

## Beschreibung

Die Erfindung betrifft einen Kurzschlussring für einen Kurzschlusskäfig einer elektrischen Maschine, wobei der Kurzschlussring wenigstens eine Aussparung, vorzugsweise mehrere Aussparungen, zur Aufnahme von wenigstens einem Käfigstab, vorzugsweise mehreren Käfigstäben, aufweist, wobei der Kurzschlussring dazu ausgebildet ist, ein Ende des Käfigstabs aufzunehmen.

Zur Bildung eines Kurzschlusskäfigs für einen Käfigläufer wird mindestens ein Kurzschlussring mit Käfigstäben verbunden, vorzugsweise werden die Käfigstäbe sowohl an einem vorderen axialen Ende als auch an einem hinteren axialen Ende mit jeweils einem Kurzschlussring verbunden. Diese Verbindung muss elektrisch leitend ausgeführt sein.

Die Patentschrift DE 3834466 C1 offenbart hierzu einen Kurzschlussläufer für eine elektrische Maschine, bei dem die an den beiden Stirnseiten des Läuferblechpaketes aus den Nuten vorstehenden Enden der Läuferstäbe in eine stirnseitige, durch einen Innen- und einen Außenrand begrenzte Ringvertiefung des Kurzschlussringes ragen und durch in die Ringvertiefung eingebrachtes, in der Ringvertiefung durch gleichzeitige Erwärmung des vollständigen Kurzschlussringes zum Schmelzen gebrachtes und danach erstarrtes Hartlot elektrisch und mechanisch mit dem Kurzschlussring verbunden sind.

Bei einer Verbindung mittels Hartlötverfahren müssen jedoch Lötspalte eingehalten werden die sich nur schwer prozesssicher herstellen lassen.

Der Erfindung liegt die Aufgabe zugrunde, eine Verbindung zwischen Kurzschlussring und Käfigstäben zu verbessern.

Die Lösung der Aufgabe gelingt durch einen Kurzschlussring gemäß Anspruch 1, d.h. einen Kurzschlussring für einen Kurzschlusskäfig einer elektrischen Maschine, wobei der Kurzschlussring wenigstens eine Aussparung, vorzugsweise mehrere Aussparungen, zur Aufnahme von wenigstens einem Käfigstab, vorzugsweise mehreren Käfigstäben aufweist, wobei der Kurzschlussring dazu ausgebildet ist, ein Ende des Käfigstabes aufzunehmen, wobei an wenigstens eine Aussparung angrenzend eine Vertiefung mit einer Vertiefungskontur an einem vorderen axialen Ende des Kurzschlussrings ausgebildet ist.

Ferner gelingt die Lösung der Aufgabe durch ein Verfahren gemäß Anspruch 10, d.h. ein Verfahren zur Fertigung eines derartigen Kurzschlussrings.

Zudem gelingt die Lösung der Aufgabe durch ein Verfahren gemäß Anspruch 11, d.h. ein Verfahren zum Verbinden eines derartigen Kurzschlussrings mit wenigstens einem Käfigstab, vorzugsweise mehreren Käfigstäben, zur Fertigung eines Kurzschlusskäfigs.

Ferner gelingt die Lösung der Aufgabe durch einen Kurzschlusskäfig nach Anspruch 14, d.h. ein Kurzschlusskäfig für eine elektrische Maschine gefertigt nach einem derartigen Verfahren, sowie durch eine elektrische Maschine gemäß Anspruch 15.

In einer vorteilhaften Ausführung der Erfindung ist der Kurzschlussring dazu ausgebildet, ein Ende des Käfigstabes von einem hinteren axialen Ende des Kurzschlussrings bis zu einer Grenzfläche aufzunehmen.

Dies hat den Vorteil, dass der Kurzschlussring mit einem oder mehreren Käfigstäben mechanisch verbunden ist.

In einer weiteren vorteilhaften Ausführungsform der Erfindung ist die Vertiefung vom vorderen axialen Ende des Kurzschlussrings bis zur Grenzfläche ausgebildet. Vorteilhaft grenzen das Ende des Käfigstabs und die Vertiefung aneinander an.

Dies hat den Vorteil, dass der Kurzschlussring einfacher gefertigt werden kann.

Der Kurzschlussring ist vorteilhaft einstückig gefertigt.

In einer weiteren vorteilhaften Ausführungsform der Erfindung entspricht die Vertiefungskontur einer Aussparungskontur. Vorteilhaft entspricht die Aussparungskontur einer Kontur des Käfigstabes.

Dies hat den Vorteil, dass der Kurzschlussring einfacher gefertigt werden kann.

In einer weiteren vorteilhaften Ausführungsform der Erfindung ist die Vertiefungskontur kreisförmig.

Dies hat den Vorteil, dass wirkende Kräfte, die beispielsweise während eines Betriebs der elektrischen Maschine auftreten und somit auf den Kurzschlusskäfig (also bei bestehender Verbindung von Kurzschlussring und Käfigstäben) wirken, gleichmäßig verteilt werden, insbesondere bei Käfigstäben mit einem kreisförmigen Querschnitt.

In einer weiteren vorteilhaften Ausführungsform der Erfindung entspricht die Vertiefungskontur einer vergrößerten oder verkleinerten Form der Aussparungskontur.

Dies hat den Vorteil, dass bei einer Aufnahme des Käfigstabs durch den Kurzschlussring der Kurzschlussring und der Käfigstab besonders gut per Formschluss und Kraftschluss verbunden sind.

In einer weiteren vorteilhaften Ausführungsform der Erfindung umgibt die Vertiefungskontur wenigstens zwei Aussparungskonturen.

Dies hat den Vorteil, dass die Fertigung des Kurzschlussrings sich mittels additiver oder subtraktiver Fertigungsverfahren leichter gestaltet.

Bei einer subtraktiven, z. B. einer spanenden, Bearbeitung des Kurzschlussrings, insbesondere zur Ausbildung der Vertiefung, muss z. B. ein Fräser nicht an jeder Aussparung angrenzend eine Vertiefung ausbilden, sondern kann an zwei oder mehr Aussparungen angrenzend eine Vertiefung ausbilden. Dadurch geht die Fertigung schneller vonstatten.

Auch die additive Fertigung geht bei dieser Ausführungsform schneller vonstatten.

Beim Verfahren zum Verbinden eines derartigen Kurzschlussrings mit wenigstens einem Käfigstab, vorzugsweise mehreren Käfigstäben, zur Fertigung eines Kurzschlusskäfigs ist diese Ausführungsform ebenso vorteilhaft. Beim Verbinden, insbesondere mittels eines additiven Verfahrens, muss hierbei nicht Vertiefung für Vertiefung mit einem Material zur Schaffung der Verbindung befüllt werden, sondern das Verbinden kann für zwei oder mehrere Aussparungen zusammen erledigt werden. Dies spart Zeit und somit Kosten.

In einer weiteren vorteilhaften Ausführungsform der Erfindung entspricht eine Länge in Radialrichtung des Kurzschlussrings der Vertiefungskontur im Wesentlichen einer Länge in Radialrichtung des Kurzschlussrings der Aussparung und die Vertiefung grenzt wenigstens an zwei Aussparungen an.

In einer weiteren vorteilhaften Ausführungsform der Erfindung entspricht eine Anzahl der Vertiefungen einer Anzahl der Aussparungen.

Dies hat den Vorteil, dass jeder Käfigstab optimal mit dem Kurzschlussring verbunden werden kann, wodurch eine hohe Stabilität erreicht wird.

Vorzugsweise sind die Käfigstäbe in Nuten eines Läuferpakets, insbesondere Läuferblechpakets, angeordnet. Vorzugsweise ragen Enden der Käfigstäbe aus dem Läuferpaket heraus. Vorzugsweise ragen die Enden der Käfigstäbe an einem vorderen axialen Ende des Läuferpakets und an einem hinteren axialen Ende des Läuferpakets aus dem Läuferpaket heraus.

Vorzugsweise ist am vorderen und hinteren axialen Ende des Läuferpakets ein Kurzschlussring ausgeführt.

In einer weiteren vorteilhaften Ausführungsform der Erfindung ist wenigstens ein Kurzschlussring, vorzugsweise beide Kurzschlussringe, als axial beabstandeter Kurzschlussring ausgeführt.

Durch die Beabstandung eines oder beider Kurzschlussringe ist zwischen dem Kurzschlussring und dem axialen Ende des Läuferpakets ein Spalt ausgeführt, der eine gute Kühlung des Kurzschlussrings ermöglicht.

Die Erfindung umfasst ferner ein Verfahren zu Fertigung eines derartigen Kurzschlussrings mittels eines additiven Fertigungsverfahrens.

Der Kurzschlussring wird vorteilhaft einstückig gefertigt.

Hierfür bieten sich verschiedene additive Fertigungsverfahren an. Vorteilhaft wird als additives Fertigungsverfahren jedoch das 3D-Metal-Print-Verfahren (3DMP) angewendet, da dies den Vorteil einer sauberen und schnellen Fertigung hat.

Jedoch sind auch andere additive Fertigungsverfahren zur Fertigung eines derartigen Kurzschlussrings möglich.

Die Erfindung umfasst ferner ein Verfahren zum Verbinden eines derartigen Kurzschlussrings mit wenigstens einem Käfigstab, vorzugsweise mit mehreren Käfigstäben, zur Fertigung eines Kurzschlusskäfigs mit folgenden Schritten: Zusammenfügen des Kurzschlussrings und der Käfigstäbe. Einbringen wenigstens eines Materials in wenigstens eine Vertiefung, vorzugsweise in alle Vertiefungen, mittels eines additiven Verfahrens.

Vorteilhaft werden der Kurzschlussring und die Käfigstäbe, insbesondere bei einem beabstandeten Kurzschlussring, passgenau zusammengefügt.

Ferner können auch andere Mittel eingesetzt werden, um bei der Verbindung von Kurzschlussring und Käfigstäben ein Austreten von Material zu verhindern.

Vorteilhaft werden der Kurzschlussring und die Käfigstäbe zusammengefügt und während und/oder nach dem Zusammenfügen wird ein Dichtungsmittel zur Abdichtung von Spalten zwischen Kurzschlussring und Käfigstab eingesetzt.

In einer vorteilhaften Ausführungsform der Erfindung ist das additive Verfahren ein additives Lichtbogen-Schweiß-Verfahren oder ein Metall-Pulver-Auftrags-Verfahren (MPA) oder ein 3D-Metal-Print-Verfahren (3DMP).

Jedoch eignen sich auch andere additive Fertigungsverfahren.

Das additive Verfahren bietet den Vorteil, dass eine stoffschlüssige Verbindung bei gleichzeitigem Materialauftrag erreicht wird. Diese stoffschlüssige Verbindung ist hinsichtlich ihrer elektrischen und mechanischen Eigenschaften optimal.

Das additive Verfahren bietet zudem den Vorteil, dass dieses dazu ausgebildet ist, voll automatisiert abzulaufen. Dies ermöglicht ein prozesssicheres Verfahren. Zudem bietet das additive Verfahren den Vorteil, dass insbesondere Kleinserien und/oder Prototypen flexibel und schnell gefertigt werden können, auch unter Berücksichtigung geänderter Geometrien.

Vorteilhaft wird das additive Verfahren in den Fertigungsprozess zur Herstellung der elektrischen Maschine integriert.

Als additives Lichtbogen-Schweiß-Verfahren wird Schweißen bezeichnet, wenn durch einen Schweißzusatzwerkstoff, z. B. Draht oder Pulver, unter Anwendung von Wärme ein Volumenaufbau stattfindet. Hierbei wird Schicht für Schicht der Schweißzusatzwerkstoff aufgetragen, durch Schmelzen stoffschlüssig mit einem zu verbindenden Bauteil oder der darunterliegenden Schicht verbunden und somit der Volumenaufbau bewerkstelligt.

Verfahren, die auf einem ähnlichen Prinzip beruhen und sich daher ebenso eignen, sind z. B. die Folgenden: Laser-Auftrag-Schweiß-Verfahren oder Plasma-Pulver-Auftrag-Schweiß-Verfahren, DMD-Verfahren (Direct Metal Deposition), LMD-Verfahren (Laser Metal Deposition) und 3DMP-Verfahren (3D Metal Print).

Beim MPA-Verfahren wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe magnetische Energie des Pulverpartikels wird beim Aufprall in Wärme umgewandelt, wodurch der Partikel anhaftet. Da die Pulverpartikel nicht aufgeschmolzen werden, findet nur ein geringer Energie-eintrag in das Bauteil statt. Beim MPA-Verfahren können mehrere Düsen gleichzeitig verschiedene Pulverpartikel auftragen. Somit kann auch ein Bauteil geschaffen werden, das wenigstens zwei unterschiedliche Materialien aufweist.

Das 3DMP-Verfahren basiert auf dem Lichtbogen-Schweiß-Verfahren und verwendet als Ausgangsmaterial Draht. Schweißraupe für Schweißraupe wird hiermit ein Werkstück gedruckt. Das 3DMP-Verfahren bietet den Vorteil, dass viele Materialien bereits als Draht erhältlich sind, nicht jedoch als Pulver.

Zudem ist Draht als Werkstoff günstiger als Werkstoff in Pulverform. Das 3DMP-Verfahren bietet ferner eine hohe Aufbaurate.

In einer weiteren vorteilhaften Ausführungsform der Erfindung ist das Material Aluminium oder Kupfer oder deren Legierungen. Die beiden Materialien Aluminium und Kupfer stellen in Bezug auf Preis und Leitfähigkeit die bestmögliche Option zur Bildung einer elektrisch leitfähigen Verbindung dar.

Die elektrisch leitfähige Verbindung zwischen Kurzschlussring und Käfigstäben wird vorteilhaft mit einem Material realisiert, welches bereits in den Käfigstäben enthalten ist bzw. aus welchem die Käfigstäbe bestehen, vorzugsweise Kupfer. Dies hat den Vorteil, dass nur geringe Adhäsionskräfte vorliegen und dadurch die Verbindung beständig gegenüber mechanischen Belastungen ausgebildet werden kann.

Ein Kurzschlusskäfig wird vorteilhaft mittels des beschriebenen Verfahrens gefertigt. Er weist daher gute Eigenschaften bezüglich Beständigkeit gegenüber mechanischen Belastungen und Leitfähigkeit auf.

Eine elektrische Maschine mit einem Käfigläufer weist vorteilhaft den beschriebenen Kurzschlusskäfig auf. Die elektrische Maschine ist robust und weist optimale Eigenschaften bezüglich ihrer Leitfähigkeit im Läufer auf.

Die elektrische Maschine ist vorzugsweise als dynamoelektrische rotatorische Maschine ausgeführt.

Die elektrische Maschine wird vorzugsweise als Motor betrieben.

Im Folgenden wird die Erfindung anhand der in den Figuren dargestellten Ausführungsbeispiele näher beschrieben und erläutert. Es zeigen:
- FIG 1: einen Käfigläufer einer elektrischen Maschine,
- FIG 2: einen Ausschnitt einer Vertiefung Typ 3 aus FIG 1,
- FIG 3: eine Vorderansicht des Kurzschlussrings,
- FIG 4: eine Seitenansicht des Käfigläufers,
- FIG 5: ein Verfahren zum Verbinden eines beschriebenen Kurzschlussrings mit wenigstens einem Käfigstab, vorzugsweise mehreren Käfigstäben, zur Fertigung eines Kurzschlusskäfigs.

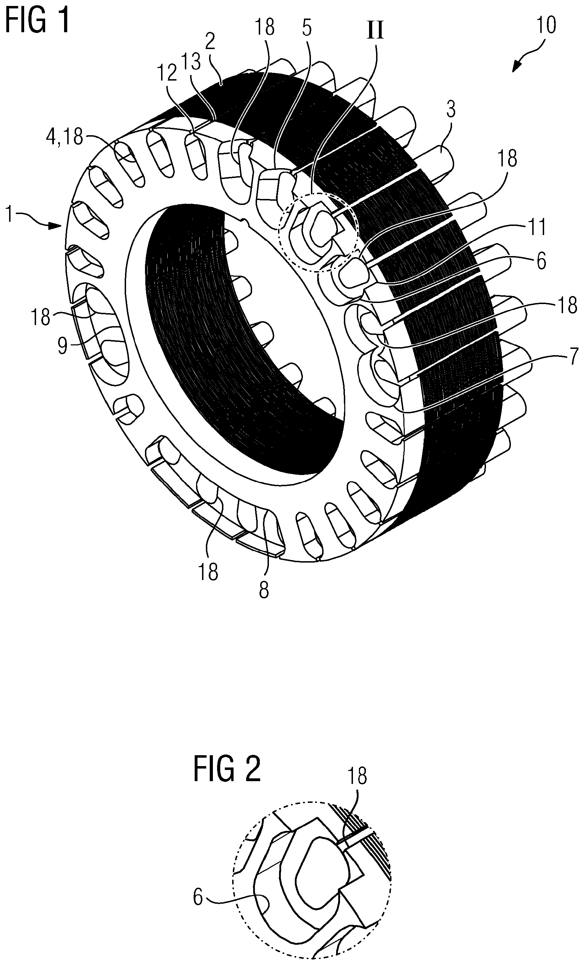

FIG 1 zeigt einen Käfigläufer 10 einer elektrischen Maschine. Der Käfigläufer 10 weist einen Kurzschlussring 1 sowie Käfigstäbe 3 auf. Die Käfigstäbe sind in Nuten eines Blechpakets 2 angeordnet. Der Kurzschlussring 1 weist ein vorderes axiales Ende 12 und ein hinteres axiales Ende 13 auf. Zudem zeigt FIG 1 eine Grenzfläche 11. Der Kurzschlussring 1 ist dazu ausgebildet, ein Ende des Käfigstabes 2 von einem hinteren axialen Ende 13 des Kurzschlussrings bis zu einer Grenzfläche 11 aufzunehmen. Der Kurzschlussring weist hierzu Aussparungen auf. Die Figur zeigt verschiedene Möglichkeiten von Vertiefungen die am vorderen axialen Ende 12 des Kurzschlussrings 1 ausgebildet sind.

Die Vertiefung Typ 1 ist eine Vertiefung, bei welcher eine Vertiefungskontur 4 einer Aussparungskontur 18 entspricht.

Bei der Vertiefung Typ 2 ist die Vertiefungskontur 5 größer als die Aussparungskontur 18. Die Figur zeigt, dass die Vertiefung Typ 2 von der Vertiefungskontur 5 am vorderen axialen Ende 12 des Kurzschlussrings 1 in Axialrichtung schräg zur Aussparungskontur 18 an der Grenzfläche 11 abfällt. Der abfallende Bereich ist mit 51 gekennzeichnet.

Die Vertiefung Typ 3 weist ebenso eine Vertiefungskontur 6 auf, die größer ist als die Aussparungskontur 18.

Die Figur zeigt jedoch, dass die Vertiefung Typ 3 von der Vertiefungskontur 6 am vorderen axialen Ende 12 des Kurzschlussrings 1 in Axialrichtung gerade zur Aussparungskontur 18 an der Grenzfläche 11 abfällt. Dadurch ergibt sich eine angefaste Vertiefung. Die Anfasung ist mit 61 gekennzeichnet.

Die Vertiefung Typ 4 weist eine kreisförmige Vertiefungskontur 7 auf, welche die Aussparungskontur 18 der Aussparung umgibt. Die Vertiefungskontur 7 weist einen Durchmesser 71 auf.

Wenn zwei Vertiefungen mit der Vertiefungskontur 7 und Durchmesser 71 nebeneinander auf dem Kurzschlussring 1 liegen, können - wie in der Figur gezeigt - aufgrund einer Größe des Durchmessers 71 die beiden Vertiefungen ineinander greifen.

Die Vertiefung Typ 5 mit der Vertiefungskontur 8 umgibt mehrere Aussparungen, wenigstens zwei Aussparungen, und somit mehrere Aussparungskonturen 18. Eine Länge 82 in Radialrichtung 100 des Kurzschlussrings 1 der Vertiefungskontur 8 entspricht in der Figur im Wesentlichen einer Länge 81 in Radialrichtung 100 des Kurzschlussrings 1 der Aussparungskontur 18.

Die Vertiefung Typ 5 grenzt an wenigstens zwei Aussparungen an, in der Figur an vier Aussparungen.

Die Vertiefung Typ 6 mit der Vertiefungskontur 9 umgibt in der Figur zwei Aussparungen mit der Aussparungskontur 18. Eine Länge 91 in Radialrichtung 100 des Kurzschlussrings 1 der Aussparungen ist hierbei kleiner als eine Länge 92 in Radialrichtung 100 des Kurzschlussrings 1 der Vertiefung.

Die Vertiefung Typ 6 ist in der Figur oval ausgebildet. Jedoch sind für die in der Figur gezeigten Vertiefungen Typ 1 bis Typ 6 auch andere Konturen - in Form von z. B. Kreisen, Dreiecken, Vierecken oder Vielecken - möglich.

In der Figur reichen die Käfigstäbe 3 bis zu einer Grenzfläche 11. Jedoch ist es auch möglich, dass die Käfigstäbe 3 nicht ganz bis zur Grenzfläche 11 reichen bzw. weiter in Richtung des vorderen axialen Endes 12 des Kurzschlussrings 1 in den Kurzschlussring 1 hineinragen.

Die Figur zeigt verschiedene mögliche Vertiefungen. Vorteilhaft ist bei einem Kurzschlussring nur ein Typ ausgebildet.

FIG 2 zeigt einen Ausschnitt einer Vertiefung Typ 3 aus FIG 1. In der FIG 2 sieht man einen abgesetzten Bereich, der daher rührt, dass die Vertiefungskontur 6 größer als die Aussparungskontur 18 ist.

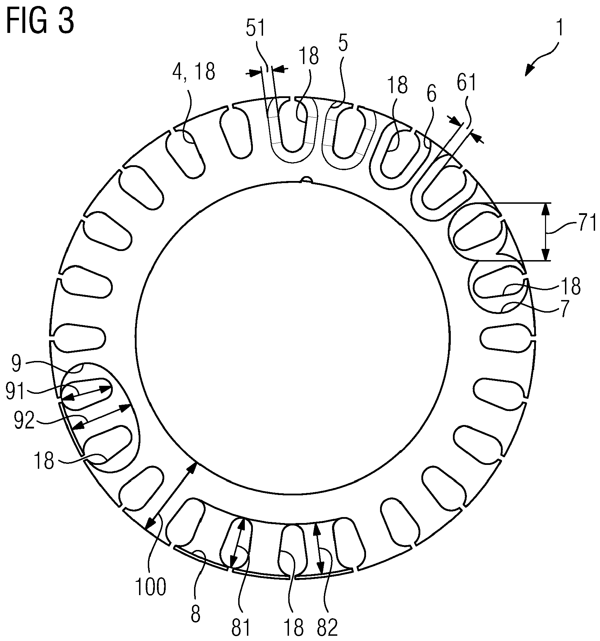

FIG 3 zeigt eine Vorderansicht des Kurzschlussrings 1 mit den Merkmalen aus FIG 1.

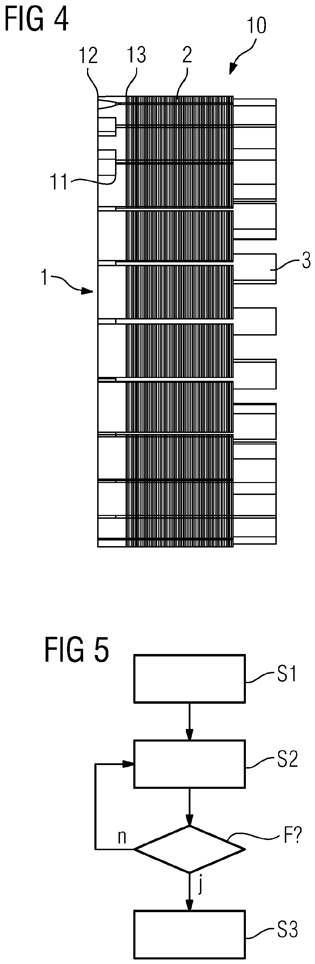

FIG 4 zeigt eine Seitenansicht des Käfigläufers 10. In der Figur wird deutlich die Grenzfläche 11 gezeigt. Die Grenzfläche 11 ist vorteilhaft bezüglich einer axialen Länge des Kurzschlussrings 1, der vom vorderen axialen Ende 12 zum hinteren axialen Ende 13 reicht, nach 10 % bis 90% der axialen Länge des Kurzschlussrings 1 vom vorderen axialen Ende 12 aus gesehen, angeordnet.

FIG 5 zeigt ein Verfahren zum Verbinden eines beschriebenen Kurzschlussrings mit wenigstens einem Käfigstab, vorzugsweise mehreren Käfigstäben, zur Fertigung eines Kurzschlusskäfigs.

In Verfahrensschritt S1 werden der Kurzschlussring und die Käfigstäbe zusammen gefügt. In Verfahrensschritt S2 erfolgt ein Einbringen wenigstens eines Materials in wenigstens eine Vertiefung mittels eines additiven Verfahrens. Als additives Verfahren wird vorzugsweise ein additives Lichtbogen-Schweiß-Verfahren angewendet.

Mit F? ist die Frage gekennzeichnet, ob schon in alle zu füllenden Vertiefungen Material eingebracht wurde. Ist dies nicht der Fall- mit n gekennzeichnet - wird im Verfahrensschritt S2 die nächste Vertiefung mittels des additiven Verfahrens gefüllt. Dies wird solange wiederholt bis alle zu füllenden Vertiefungen mit Material versehen sind - mit j gekennzeichnet. In Verfahrensschritt S3 ist der Kurzschlussring mit den Käfigstäben elektrisch leitfähig und mechanisch strapazierfähig verbunden.

## Patentansprüche

1. Kurzschlussring (1) für einen Kurzschlusskäfig einer elektrischen Maschine, wobei der Kurzschlussring (1) wenigstens eine Aussparung, vorzugsweise mehrere Aussparungen, zur Aufnahme von wenigstens einem Käfigstab (3), vorzugsweise mehreren Käfigstäben, aufweist, wobei der Kurzschlussring (1) dazu ausgebildet ist, ein Ende des Käfigstabs (3) aufzunehmen,
**dadurch gekennzeichnet, dass** an wenigstens eine Aussparung angrenzend eine Vertiefung mit einer Vertiefungskontur (4,5,6,7,8,9) an einem vorderen axialen Ende (12) des Kurzschlussrings (1) ausgebildet ist.

2. Kurzschlussring (1) nach Anspruch 1, wobei der Kurzschlussring (1) dazu ausgebildet ist, ein Ende des Käfigstabs (3) von einem hinteren axialen Ende (13) des Kurzschlussrings (1) bis zu einer Grenzfläche (11) aufzunehmen.

3. Kurzschlussring (1) nach Anspruch 1 oder 2, wobei die Vertiefung vom vorderen axialen Ende (12) des Kurzschlussrings (1) bis zur Grenzfläche (11) ausgebildet ist.

4. Kurzschlussring (1) nach einem der vorhergehenden Ansprüche, wobei die Vertiefungskontur (4,5,6,7,8,9) einer Aussparungskontur (18) entspricht.

5. Kurzschlussring (1) nach einem der vorhergehenden Ansprüche, wobei die Vertiefungskontur (7) kreisförmig ist.

6. Kurzschlussring (1) nach einem der Ansprüche 4 oder 5, wobei die Vertiefungskontur (5,6) einer vergrößerten oder verkleinerten Form der Aussparungskontur (18) entspricht.

7. Kurzschlussring (1) nach einem der Ansprüche 4 bis 6, wobei die Vertiefungskontur (8,9) wenigstens zwei Aussparungskonturen (18) umgibt.

8. Kurzschlussring (1) nach einem der Ansprüche 4 bis 7, wobei eine Länge (82) in Radialrichtung (100) des Kurzschlussrings (1) der Vertiefungskontur (8) im Wesentlichen einer Länge (81) in Radialrichtung (100) des Kurzschlussrings (1) der Aussparungskontur (18) entspricht und die Vertiefung wenigstens an zwei Aussparungen angrenzt.

9. Kurzschlussring (1) nach einem der vorhergehenden Ansprüche, wobei eine Anzahl der Vertiefungen einer Anzahl der Aussparungen entspricht.

10. Verfahren zur Fertigung eines Kurzschlussrings (1) nach einem der Ansprüche 1 bis 9 mittels eines additiven Fertigungsverfahrens.

11. Verfahren zum Verbinden eines Kurzschlussrings (1) nach einem der Ansprüche 1 bis 9 mit wenigstens einem Käfigstab (3), vorzugweise mehreren Käfigstäben, zur Fertigung eines Kurzschlusskäfigs mit folgenden Schritten:
- Zusammenfügen des Kurzschlussrings (1) und der Käfigstäbe (3)
- Einbringen wenigstens eines Materials in wenigstens eine Vertiefung, vorzugsweise in alle Vertiefungen, mittels eines additiven Verfahrens.

12. Verfahren nach Anspruch 11, wobei das additive Verfahren ein additives Lichtbogenschweißverfahren oder ein Metall-Pulver-Auftrags-Verfahren oder ein 3D-Metal-Print-Verfahren ist.

13. Verfahren nach einem der Ansprüche 11 oder 12, wobei das Material Aluminium oder Kupfer oder deren Legierungen ist.

14. Kurzschlusskäfig für eine elektrische Maschine, gefertigt nach einem Verfahren nach einem der Ansprüche 11 bis 13.

15. Elektrische Maschine mit einem Kurzschlusskäfig nach Anspruch 14.
